# EUROPEAN PATENT APPLICATION

(11) **EP 3 190 353 A1**
(43) Date of publication of application: **12.07.2017**
(21) Application number: 15838674.8
(22) Date of filing: 24.08.2015
(51) Int. Cl.: F24J 2/10, F24J 2/38, G02B 5/10, G02B 7/182, F24J 2/54

(54) **SOLAR COLLECTOR**

(30) Priority: 04.09.2014 JP 2014179947
(71) Applicant: Hitachi Zosen Corporation, Osaka-shi, Osaka 559-8559 (JP)
(72) Inventor: MA, Donghui, Osaka-shi Osaka 559-8559 (JP); ASHIDA, Satoshi, Osaka-shi Osaka 559-8559 (JP); KOSAKA, Hiroshi, Osaka-shi Osaka 559-8559 (JP); IMOTO, Hirokazu, Osaka-shi Osaka 559-8559 (JP); OKADA, Jun, Osaka-shi Osaka 559-8559 (JP); KITAMURA, Koji, Osaka-shi Osaka 559-8559 (JP); MORITA, Hiroyuki, Osaka-shi Osaka 559-8559 (JP)
(74) Representative: Grünecker Patent- und Rechtsanwälte PartG mbB
(86) International application number: PCT/JP2015/073663
(87) International publication number: WO 2016/035591

(57) **Abstract**

A sunlight concentrating apparatus includes a plate-like reflector (3) and a pair of bending mechanisms for bending a reflecting surface (30) of the reflector (3). The reflector (3) includes reflecting plates (31) and support plates (32). Each reflecting plate (31) includes a mirror plate (36) having an upper surface that is part of the reflecting surface (30), and an auxiliary plate (37) that overlaps with approximately the entire lower surface of the mirror plate (36). The support plates (32) overlap with the lower surface of the auxiliary plate (37) and are connected at each end in the width direction to the pair of bending mechanisms. The reflecting plates (31) and the support plates (32) are fixed to each other with a double-faced adhesive tape (38) in which an adhesive layer is disposed on each side of a base material. Thus, interlayer sliding occurs between the reflecting plates (31) and the support plates (32) when the reflecting surface (30) is bent. As a result, the reflecting surface (30) is bent with a small force into a desired shape, and damage to the reflecting surface (30) when being deformed is suppressed or prevented.

## Description

### Technical Field

The present invention relates to a sunlight concentrating apparatus for concentrating sunlight onto a heat recovery part.

### Background Art

The practical applications of solar heat recovery systems that recover solar heat energy by concentrating sunlight to heat a heating medium have been advancing in recent years. Efficiently recovering solar heat energy is important in the solar heat recovery systems.

For example, International Publication No. 2011/086825 (Document 1) discloses a technique for use in a solar light collecting device that tilts a reflecting mirror in accordance with the movement of the sun, in which (reflected) sunlight is efficiently guided to a heat collecting device by changing the degree of bending of a reflecting surface according to the tilted position of the reflecting mirror. More specifically, in the solar light collecting device of Document 1, the center of the reflecting mirror is supported and both side edges of the reflecting mirror are raised or lowered according to the tilted position of the reflecting mirror to change the degree of bending of the reflecting surface.

Similarly, a sun tracking type condensing mirror disclosed in Japanese Patent Application Laid-Open No. S59-57201 (Document 2) changes the bent shape of a reflector having flexibility according to a change in the altitude of the sun. The reflector of Document 2 is made by bonding a glass mirror, which has a reflecting surface and has undergone chemical strengthening, to the upper surface of a metallic thin plate with an adhesive having flexibility.

In the case of changing the degree of bending of the reflecting surface in the sunlight concentrating apparatuses, the reflector of Document 2 needs bending of both of the glass mirror and the metallic thin plate and therefore requires a large force to change the reflecting surface into a desired shape. Additionally, the glass mirror bonded to the metallic thin plate with the adhesive may be damaged due to the large force acting on the glass mirror at the time of bending the reflecting plate.

### Summary of Invention

The present invention is intended for a sunlight concentrating apparatus for concentrating sunlight onto a heat recovery part, and it is an object of the present invention to bend a reflecting surface with a small force into a desired shape. The present invention also aims to suppress damage to the reflecting surface when being deformed.

A sunlight concentrating apparatus according to the present invention includes a main shaft part that is long in a predetermined axial direction, a plate-like reflector having an upper surface that is at least part of a reflecting surface that extends in the axial direction and a width direction perpendicular to the axial direction, and having a lower surface that is fixed to the main shaft part at a central linear region thereof that is located at approximately a center in the width direction and extends in the axial direction, a main shaft supporter that supports the main shaft part rotatably about a central axis parallel to the axial direction, a rotating mechanism for rotating the main shaft part to tilt the reflecting surface, and a pair of bending mechanisms for bending the reflecting surface by equally moving opposite end portions in the width direction of the reflector in a central normal direction relative to the central linear region in accordance with rotation of the main shaft part, the central normal direction being a direction perpendicular to the axial direction and the width direction of the reflecting surface. The reflector includes a mirror plate having an upper surface that is at least part of the reflecting surface, an auxiliary plate that overlaps with approximately an entire lower surface of the mirror plate, and a support plate that overlaps with a lower surface of the auxiliary plate and is connected at opposite ends in the width direction thereof to the pair of bending mechanisms. At least two plate-like members, selected from among three plate-like members including the mirror plate, the auxiliary plate, and the support plate, are fixed to each other with a double-faced adhesive tape in which adhesive layers are disposed on both sides of a base material. According to the present invention, the reflecting surface will be bent with a small force into a desired shape. Additionally, damage to the reflecting surface when being deformed will be suppressed.

In a preferable embodiment of the present invention, the three plate-like members are fixed to one another with the double-faced adhesive tape.

In another preferable embodiment of the present invention, the auxiliary plate is a metal plate, and the mirror plate and the auxiliary plate are fixed to each other with the double-faced adhesive tape.

Another sunlight concentrating apparatus according to the present invention includes a main shaft part that is long in a predetermined axial direction, a plate-like reflector having an upper surface that is at least part of a reflecting surface that extends in the axial direction and a width direction perpendicular to the axial direction, and having a lower surface that is fixed to the main shaft part at a central linear region thereof that is located at approximately a center in the width direction and extends in the axial direction, a main shaft supporter that supports the main shaft part rotatably about a central axis parallel to the axial direction, a rotating mechanism for rotating the main shaft part to tilt the reflecting surface, and a pair of bending mechanisms for bending the reflecting surface by equally moving opposite end portions in the width direction of the reflector in a central normal direction relative to the central linear region in accordance with rotation of the main shaft part, the central normal direction being a direction perpendicular to the axial direction and the width direction of the reflecting surface. The reflector includes a reflecting plate having an upper surface that is at least part of the reflecting surface, and a support plate that overlaps with a lower surface of the reflecting plate and is connected at opposite ends in the width direction thereof to the pair of bending mechanisms. The reflecting plate and the support plate are fixed to each other with a double-faced adhesive tape in which an adhesive layer is disposed on each side of a base material. According to the present invention, the reflecting surface will be bent with a small force into a desired shape. Additionally, damage to the reflecting surface when being deformed will be suppressed.

In a preferable embodiment of the present invention, a ratio between a distance in the width direction from each end in the width direction of the reflector and a geometrical moment of inertia of the support plate with respect to the distance is constant in a portion between the end and the central linear region, or a ratio between the distance and flexural rigidity of the reflector with respect to the distance is constant in a portion between the end and the central linear region.

More preferably, the support plate includes a portion having a thickness that increases gradually from the end to the central linear region, to make the ratio between the distance and the flexural rigidity of the reflector with respect to the distance constant in the portion between the end and the central linear region.

These and other objects, features, aspects and advantages of the present invention will become more apparent from the following detailed description of the present invention when taken in conjunction with the accompanying drawings.

### Brief Description of Drawings

Fig. 1 is a plan view of a solar heat recovery system;
Fig. 2 is a plan view of part of a sunlight concentrating apparatus;
Fig. 3 is a cross-sectional view of a reflecting plate;
Fig. 4 is a cross-sectional view of a double-faced adhesive tape;
Fig. 5 is a front view illustrating the vicinity of the center of the sunlight concentrating apparatus;
Fig. 6 is a cross-sectional view of the sunlight concentrating apparatus;
Fig. 7 illustrates a rotating mechanism;
Fig. 8 is a cross-sectional view of the sunlight concentrating apparatus;
Fig. 9 illustrates a rod supporter;
Fig. 10 illustrates a reflecting plate and a support plate that are bent;
Fig. 11 is an enlarged view illustrating one ends of the reflecting plate and the support plate that are bent;.
Fig. 12 illustrates a relationship between the amount of bending and a bending load;
Fig. 13 illustrates a relationship between the amount of bending and the bending load;
Fig. 14 is a plan view of the support plate;
Fig. 15 is a side view of the support plate; and
Fig. 16 is a plan view of part of another sunlight concentrating apparatus.

### Description of Embodiments

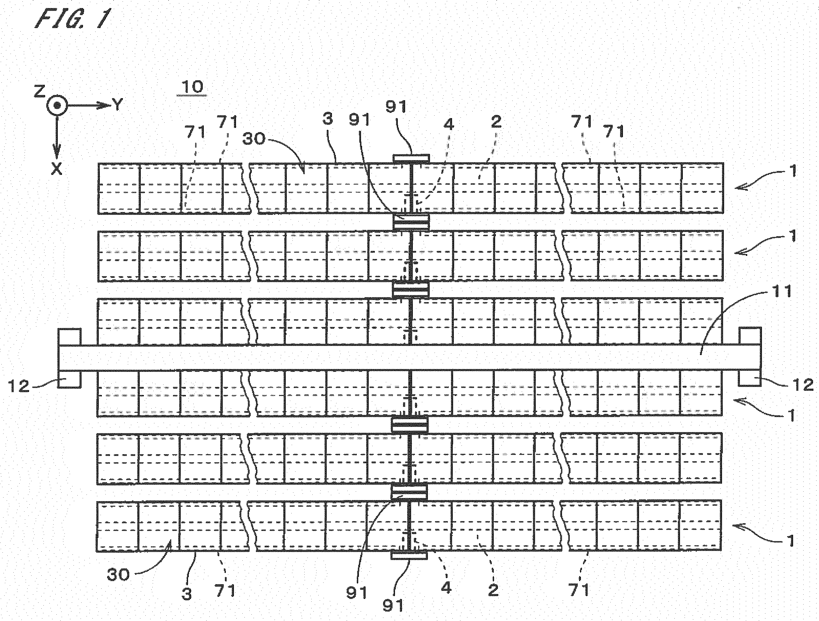

Fig. 1 is a plan view of a Fresnel solar heat recovery system 10 according to an embodiment of the present invention. In Fig. 1, X, Y, and Z directions that are orthogonal to one another are indicated by arrows (the same applies to drawings described later). The solar heat recovery system 10 includes a heat recovery part 11 in which a heating medium flows, and a plurality of (in Fig. 1, six) sunlight concentrating apparatuses 1 for concentrating sunlight onto the heat recovery part 11 to heat the heating medium in the heat recovery part 11. The heat recovery part 11 is a tubular member that is long in the Y direction. Both ends of the heat recovery part 11 are supported by a pair of strut parts 12, and the heat recovery part 11 is disposed on the +Z side of the sunlight concentrating apparatuses 1. The heating medium in the heat recovery part 11 is, for example, circulated between the heat recovery part 11 and an external electric power generator and used for electric power generation by the electric power generator. In the following description, the +Z side is referred to as the "upper side," and the -Z side is referred to as the "lower side."

The sunlight concentrating apparatuses 1 are arranged in the X direction below the heat recovery part 11. Each sunlight concentrating apparatus 1 includes a main shaft part 2, a reflector 3, and a rotating mechanism 4. The main shaft part 2 is a generally tubular member that is long in the Y direction. The reflector 3 is a member that is fixed to the main shaft part 2 and is long along the length of the main shaft part 2 (i.e., in the Y direction that is hereinafter referred to as an "axial direction"). The reflector 3 has a plate-like shape and has an upper surface that serves as a reflecting surface 30. The reflecting surface 30 extends in the axial direction and a width direction perpendicular to the axial direction. The rotating mechanism 4 is disposed in the vicinity of the center in the axial direction of the main shaft part 2. As will be described later, the reflecting surface 30 is tilted by the rotating mechanism 4 rotating the main shaft part 2. The following description focuses on one of the sunlight concentrating apparatuses 1, but the other sunlight concentrating apparatuses 1 also have the same configuration.

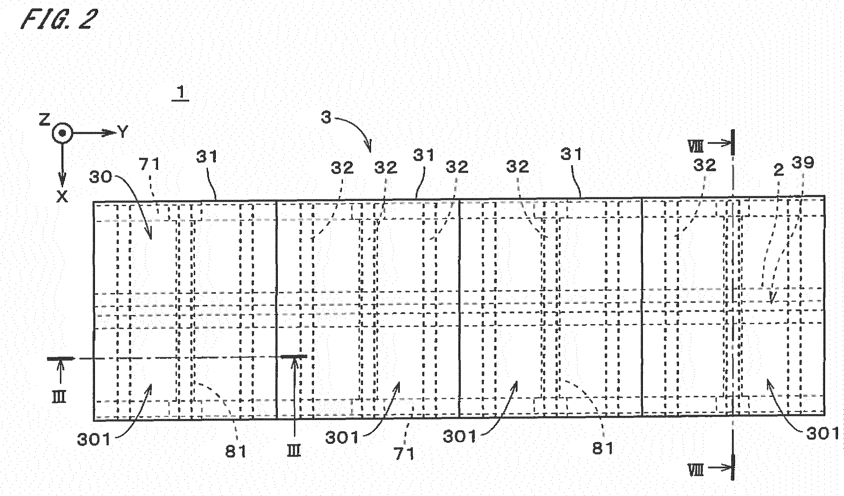

Fig. 2 is a plan view of part of a sunlight concentrating apparatus 1. The reflector 3 includes a plurality of reflecting plates 31 and a plurality of support plates 32. In Fig. 2, each reflecting plate 31 is indicated by a solid line, and each support plate 32 is indicated by a bold broken line. The upper surfaces of the reflecting plates 31 constitute the aforementioned reflecting surface 30. In other words, the upper surface of each reflecting plate 31 is part (hereinafter, referred to as a "divided reflecting surface 301 ") of the reflecting surface 30. The support plates 32 overlap with the lower surfaces of the reflecting plates 31.

Each reflecting plate 31 is a plate-like member having flexibility and a generally rectangular shape (e.g., an approximately 1 meter (m) by 1.2 m rectangle). The reflecting plates 31 are arranged in the axial direction at very small intervals. Each support plate 32 is a plate-like member having a generally strip-like shape and flexibility. Each support plate 32 extends generally in parallel with the width direction. The width in the axial direction of each support plate 32 is smaller than the width in the axial direction of each reflecting plate 31. The support plates 32 are arranged in the axial direction at intervals. In the example illustrated in Fig. 2, each reflecting plate 31 overlaps with three support plates 32. In each of the sunlight concentrating apparatuses 1 illustrated in Fig. 1, 23 units are arranged in the axial direction, where a single unit consists of four reflecting plates 31 arranged in the axial direction as illustrated in Fig. 2.

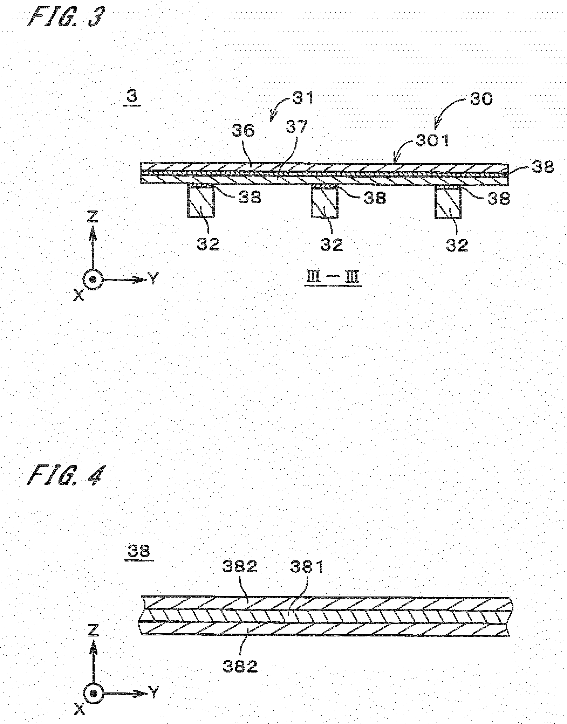

Fig. 3 is a cross-sectional view of one reflecting plate 31 of the reflector 3, taken at position III-III in Fig. 2. For the convenience of illustration, the thickness direction (Z direction) in Fig. 3 is exaggerated for emphasis. As illustrated in Fig. 3, the reflecting plate 31 includes a mirror plate 36 and an auxiliary plate 37. The mirror plate 36 and the auxiliary plate 37 are plate-like members having approximately the same shape. The upper surface of the mirror plate 36 is the divided reflecting surface 301, which is part of the reflecting surface 30. The auxiliary plate 37 overlaps with approximately the entire lower surface of the mirror plate 36. The aforementioned support plates 32 overlap with the lower surface of the auxiliary plate 37. In the example illustrated in Fig. 3, three support plates 32 overlap with the lower surface of the auxiliary plate 37 as described above. The mirror plate 36 may be a glass mirror. The auxiliary plate 37 is preferably a metal plate made of, for example, aluminum (Al). The auxiliary plate 37 serves as a back plate or reinforcing plate that reinforces the mirror plate 36 from the back side. The support plates 32 are made of, for example, aluminum or stainless steel.

In the reflector 3, the lower surface of the reflecting plate 31 (i.e., the lower surface of the auxiliary plate 37) and the upper surfaces of the support plates 32 are fixed to each other with a double-faced adhesive tape 38. The double-faced adhesive tape 38 is preferably in contact with the entire upper surfaces of the support plates 32. The lower surface of the mirror plate 36 and the upper surface of the auxiliary plate 37 are also fixed to each other with the double-faced adhesive tape 38. The double-faced adhesive tape 38 is preferably in contact with the entire lower surface of the mirror plate 36 and the entire upper surface of the auxiliary plate 37. In other words, the three plate-like members, namely, the mirror plate 36, the auxiliary plate 37, and the support plates 32, are fixed to one another with the double-faced adhesive tape 38.

Fig. 4 is an enlarged cross-sectional view of part of the double-faced adhesive tape 38. The double-faced adhesive tape 38 includes a base material 381 and two adhesive layers 382 that are provided one on each side of the base material 381. The base material 381 is made of, for example, a high-strength nonwoven fabric. Each adhesive layer 382 is made of, for example, an acrylic pressure sensitive adhesive. The thickness of the double-faced adhesive tape 38 is, for example, greater than or equal to 0.1 millimeters (mm) and less than or equal to 0.5 mm, and approximately 0.15 mm in the example illustrated in Fig. 4.

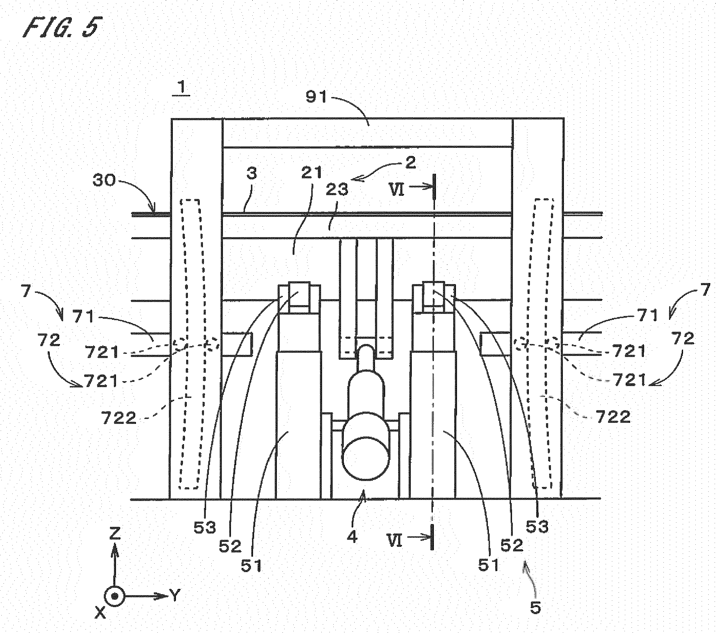

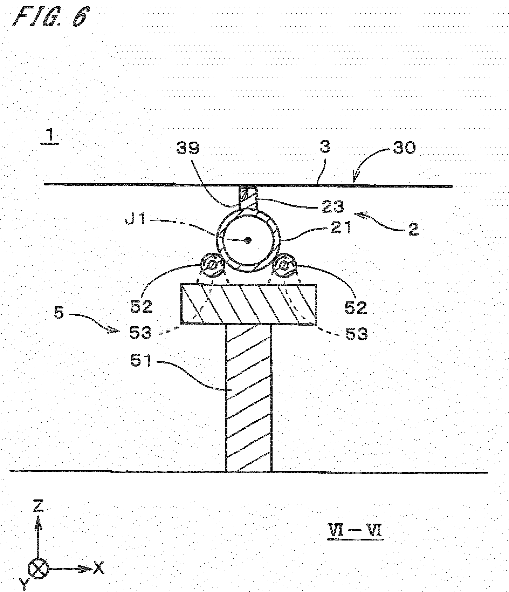

Fig. 5 is a front view illustrating the vicinity of the center in the axial direction of a sunlight concentrating apparatus 1, and Fig. 6 is a cross-sectional view of the sunlight concentrating apparatus 1 taken at a position indicated by arrows VI-VI in Fig. 5. As illustrated in Figs. 5 and 6, the main shaft part 2 includes a tubular main shaft body 21 that is fixed to the lower surface of the reflector 3 via a fixing member 23 that is long in the axial direction (Y direction). The main shaft body 21 is supported by a main shaft supporter 5. To be more specific, the main shaft supporter 5 includes a plurality of support bases 51 placed on the ground. Each support base 51 is provided with two rollers 52 that are in contact with the outer surface of the main shaft body 21, and two roller supporters 53 that rotatably support the two rollers 52 respectively on the support base 51. While two support bases 51 are illustrated in Fig. 5, in actuality three or more support bases 51 are arranged at intervals in the axial direction. In this way, the main shaft part 2 is supported by the main shaft supporter 5 so as to be rotatable about a central axis J1 (here, central axis J1 of the main shaft body 21) that is parallel to the axial direction.

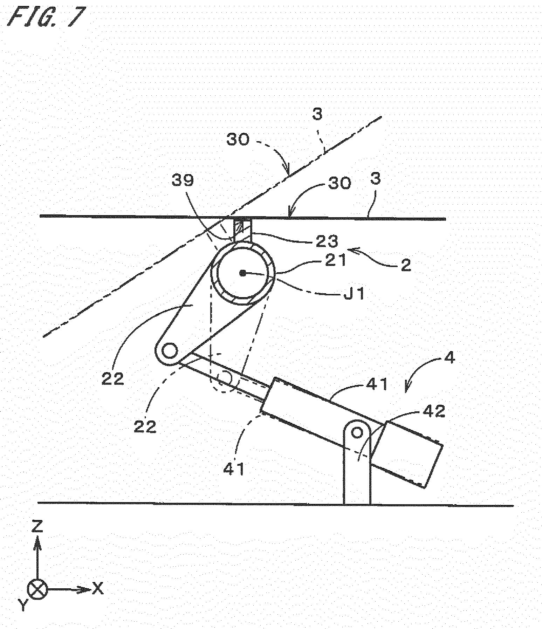

Fig. 7 illustrates the rotating mechanism 4 as viewed in the +Y direction from the -Y side. Fig. 7 illustrates part of the main shaft part 2 in cross-section. The rotating mechanism 4 includes a cylinder part 41 such as an electric cylinder, a hydraulic cylinder, or an air cylinder that is fixed to the ground via a cylinder supporter 42 so as to be rotatable about an axis parallel to the Y direction. The main shaft body 21 is provided with a coupling plate 22 that protrudes from the outer surface of the main shaft body 21, and the end of a piston of the cylinder part 41 is fixed to the coupling plate 22 with a pin. As indicated by solid lines and dashed double-dotted lines in Fig. 7, the cylinder part 41 advances and retracts the piston to rotate the main shaft part 2 about the central axis J1 and to thereby tilt the reflecting surface 30 of the reflector 3. In actuality, the degree of bending (bending curve) of the reflector 3 changes according to the rotation angle of the main shaft part 2 as will be described later, but Fig. 7 illustrates the reflector 3 that is not bent. In the following description, the direction that is perpendicular to the axial direction and along the reflecting surface 30 of the reflector 3 that is not bent is referred to as a "width direction." That is, the reflecting surface 30 of the reflector 3 that is not bent extends in the axial direction and the width direction as described above.

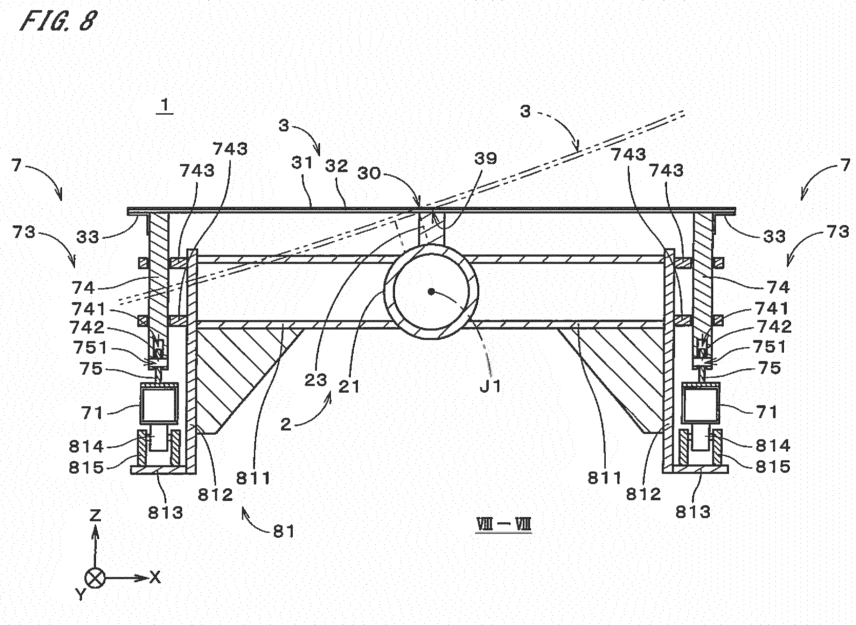

Fig. 8 is a cross-sectional view of the sunlight concentrating apparatus 1 taken at a position indicated by arrows VIII-VIII in Fig. 2. The lower surface of the reflector 3 has a linear region 39 (hereinafter, referred to as a "central linear region 39") that is located at approximately the center in the width direction and extends in the axial direction. The fixing member 23, which is long in the axial direction, is fixed to the central linear region 39 so that the reflector 3 is fixed to the main shaft part 2. Thus, the reflector 3 extends on each side in the width direction from the central linear region 39 fixed to the main shaft part 2. Focusing on a portion on one side in the width direction of the reflector 3 illustrated in Figs. 6 and 7, this portion is supported by the fixing member 23 in a cantilever manner. In the following description, the direction of the normal to the central linear region 39 of the reflector 3, i.e., the direction perpendicular to the axial direction and the width direction, is referred to as a "central normal direction. " While the width direction and the central normal direction in Fig. 8 are respectively parallel to the X direction and the Z direction, the width direction and the central normal direction are fixed relative to the reflector 3. Thus, when the reflector 3 tilts, the width direction and the central normal direction are respectively inclined relative to the X direction and the Z direction.

As illustrated in Figs. 2 and 8, a sliding rod 71 that extends in the axial direction is provided on the lower surface side (on the side opposite the reflecting surface 30) of each end in the width direction of the reflector 3. To be precise, as illustrated in Fig. 1, a pair of sliding rods 71 is disposed, one on each side in the width direction of a portion of the main shaft part 2 on the +Y side of the rotating mechanism 4, and another pair sliding rods 71 is disposed, one on each side in the width direction of a portion of the main shaft part 2 on the -Y side of the rotating mechanism 4. That is, the sunlight concentrating apparatus 1 includes the four sliding rods 71. As illustrated in Fig. 8, each sliding rod 71 has a rectangular cross-sectional shape perpendicular to the axial direction. The main shaft part 2 is provided with a plurality of rod supporters 81 that support the sliding rods 71 and are arranged at intervals in the axial direction (see Fig. 2).

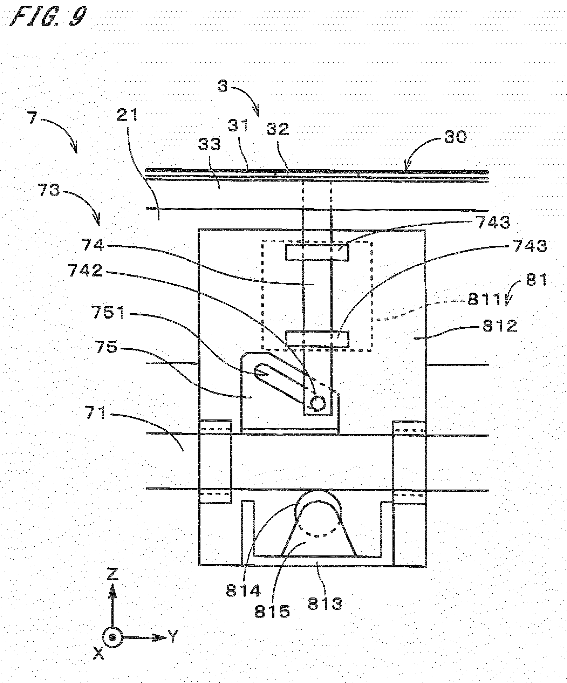

Fig. 9 illustrates a rod supporter 81 as viewed in the -X direction from the +X side. As illustrated in Figs. 8 and 9, each rod supporter 81 includes a pair of fixed arms 811 that protrude from the outer surface of the main shaft body 21 on each side in the width direction, and a pair of mounting plates 812 that are respectively provided at the ends of the pair of fixed arms 811. A support frame 813 that protrudes outward in the width direction is provided in the lower portion of each mounting plate 812, and a roller 814 and a roller supporter 815 are provided on the support frame 813, the roller 814 being in contact with the lower surface of a sliding rod 71, and the roller supporter 815 rotatably supporting the roller 814 on the support frame 813. Each sliding rod 71 is supported to be movable in the axial direction by the rollers 814 of a plurality of rod supporters 81. Note that the positions in the width direction and the central normal direction of each sliding rod 71 relative to the main shaft part 2 are constant, and the rotation of the main shaft part 2 causes each sliding rod 71 to rotate about the central axis J1 along with the main shaft part 2.

As illustrated in Figs. 1 and 5, a pair of frames 91 is provided, one on each side in the X direction of the reflector 3. Referring to one frame 91 illustrated in Fig. 5, cam rails 722 are provided at positions opposing each sliding rod 71. The cam rails 722, as viewed in the axial direction (Y direction), have arc shapes about the rotation axis of the main shaft part 2, i.e., the central axis J1 (see Fig. 8). Each sliding rod 71 has a pair of rollers 721 in one end portion thereof that is in close proximity to the rotating mechanism 4. The pair of rollers 721 is disposed one on each side in the axial direction of the cam rail 722 and in contact with two cam surfaces that are two end faces in the axial direction of the cam rail 722. The distance between the two cam surfaces of the cam rail 722 is constant, but the axial position of the cam rail 722 varies depending on the circumferential angular position thereof about the central axis J1. Thus, when the sliding rod 71 rotates about the central axis J1 along with the main shaft part 2, the axial positions of the pair of rollers 721 change along the cam rail 722. That is, the rollers 721 and the cam rail 722 convert the rotation of the main shaft part 2 into axial movement of the sliding rod 71, causing the sliding rod 71 to move (slide) in the axial direction. As described above, in the sunlight concentrating apparatus 1, the rollers 721 and the cam rail 722 implement a sliding mechanism 72 for sliding the sliding rod 71 in the axial direction in accordance with the rotation of the main shaft part 2.

In actuality, the cam rail 722 on the +Y side of the rotating mechanism 4 and the cam rail 722 on the -Y side are symmetric with respect to a plane perpendicular to the axial direction at the center in the axial direction of the main shaft part 2. Thus, the sliding rod 71 on the +Y side of the rotating mechanism 4 and the sliding rod 71 on the -Y side will slide in opposite axial directions. In other words, reaction forces of approximately the same magnitude and in opposite axial directions will act from the sliding rod 71 on the +Y side on the cam rail 722 on the +Y side and from the sliding rod 71 on the -Y side on the cam rail 722 on the -Y side. Accordingly, these reaction forces acting on the entire frame 91, which supports both of the cam rails 722, along with the movement of both of the sliding rods 71 will cancel out each other. This prevents the frame 91 from tilting or falling down due to the reaction forces acting thereon along with the movement of the sliding rods 71.

As illustrated in Figs. 8 and 9, the lower surface of each end in the width direction (hereinafter, also simply referred to as an "end") of the support plates 32 of the reflector 3 is fixed to a rib member 33 that extends in the axial direction. In actuality, the ends in the width direction of the support plates 32 arranged in the axial direction are coupled to one another by the rib member 33. A motion transmission mechanism 73 is provided between the rib member 33 and each sliding rod 71. The motion transmission mechanism 73 includes a lift rod 74 fixed to the rib member 33, and a guide part 75 fixed to the upper surface of the sliding rod 71.

The lift rod 74 is inserted in two frame parts 743 and supported to be movable in the central normal direction, the two frame parts 743 being provided on the mounting plate 812 and arranged in the central normal direction. The lift rod 74 has a slit 741 in the lower portion, and a pin member 742 extending in the width direction is provided in the slit 741. The guide part 75 has a plate-like shape extending in the axial direction and the central normal direction, and is disposed in the slit 741 of the lift rod 74. The guide part 75 has a guide hole 751 that is long in a direction inclined relative to the axial direction, and the pin member 742 is inserted in the guide hole 751. In this way, the sliding rods 71 and the ends of the support plates 32 of the reflector 3 are mechanically coupled to each other, and when the sliding rods 71 slide in the axial direction, the lift rods 74 move in the central normal direction to change the amounts of bending of the end portions of the reflector 3 (the amount of displacement from the state where the reflector 3 is not bent).

As described above, the sliding rods 71, the sliding mechanisms 72 (see Fig. 5), and the motion transmission mechanisms 73 implement the bending mechanisms 7 for changing the amount of bending of the reflector 3 in accordance with the rotation of the main shaft part 2. The bending mechanisms 7 include a plurality of sets of sliding mechanisms 72 and motion transmission mechanisms 73 arranged at approximately equal intervals in the axial direction. The bending mechanisms 7 are connected to the ends in the width direction of the support plates 32 via the rib members 33.

In the sunlight concentrating apparatus 1, the bending mechanism 7 disposed on the +X side of the main shaft part 2 and the bending mechanism 7 disposed on the -X side in Fig 8 have the same structure and move each end portion of the reflector 3 in the same direction by the same distance in accordance with the rotation of the main shaft part 2. That is, the pair of bending mechanisms 7 that are connected, one to each end in the width direction of the plurality of support plates 32, move opposite end portions in the width direction of the reflector 3 similarly in the central normal direction in accordance with the rotation of the main shaft part 2. Accordingly, the portion of the reflecting surface 30 on the +X side of the central linear region 39 and the portion thereof on the -X side are bent in the same manner. In Fig. 8, the reflector 3 that is inclined to a given circumferential angular position about the central axis J1 is indicated by dashed double-dotted lines.

As described previously, the cam rail 722 on the +Y side of the rotating mechanism 4 and the cam rail 722 on the -Y side in Fig. 5 are symmetric with respect to a plane perpendicular to the axial direction at the center in the axial direction of the main shaft part 2, and the sliding rod 71 on the +Y side of the rotating mechanism 4 and the sliding rod 71 on the -Y side will slide in opposite axial directions by the same distance in accordance with the rotation of the main shaft part 2. Moreover, the guide hole 751 in the guide part 75 of the sliding rod 71 on the +Y side of the rotating mechanism 4 and the guide hole 751 in the guide part 75 of the sliding rod 71 on the -Y side have symmetrical shapes with respect to the above plane. Thus, the amount of bending of the end portion in the width direction of the reflector 3 on the +Y side of the rotating mechanism 4 is the same as the amount of bending of the end portion in the width direction of the reflector 3 on the -Y side. Accordingly, the reflecting surface 30 has approximately the same bending curve (curve indicating the amount of bending at each position in the width direction) in the axial direction.

In the solar heat recovery system 10 in Fig. 1, the rotating mechanisms 4 of the plurality of sunlight concentrating apparatuses 1 are controlled by a controller (not shown) in accordance with the movement of the sun. More specifically, for each possible altitude of the sun at the site where the solar heat recovery system 10 is installed, a parabola is assumed in a plane perpendicular to the axial direction, the parabola having a symmetry axis that is a straight line parallel to sunlight and passing through the heat recovery part 11, having a focal point that is a position on the heat recovery part 11, and passing through a position (the center in the width direction) on the reflecting surface 30.

Then, the tilt of the tangent to the parabola at the position on the reflecting surface 30 and the curvature of the parabola at that position are acquired. The main shaft part 2 is rotated such that the tilt angle at the center in the width direction of the reflecting surface 30 (at the position of the central linear region 39) matches the tilt of the tangent to the parabola at the actual altitude of the sun. The shapes of the cam rails 722 (the amount of travel of the sliding rods 71) and the shapes of the guide holes 751 (the amount of travel of the lift rods 74) are determined in accordance with the rotation angle of the main shaft part 2 so that the curvature of the reflecting surface 30 is approximated to the curvature of the parabola at the actual altitude of the sun. This achieves a mechanism for tilting the reflecting surface 30 in accordance with the movement of the sun and changing the bending curve of the reflecting surface 30 in accordance with the tilt of the reflecting surface 30 to efficiently guide (concentrate) (reflected) sunlight onto the heat recovery part 11.

As described above, the reflecting plates 31 and the support plates 32 of the reflector 3 are fixed to each other via the double-faced adhesive tape 38 in which the adhesive layer 382 is disposed on each side of the base material 381 (see Fig. 3). Thus, the reflecting plates 31 and the support plates 32 will slide each other (so-called " interlayer sliding") when the reflecting surface 30 is bent by the pair of bending mechanisms 7, unlike in the case where the reflecting plates 31 and the support plates 32 are bonded together with screws or an adhesive.

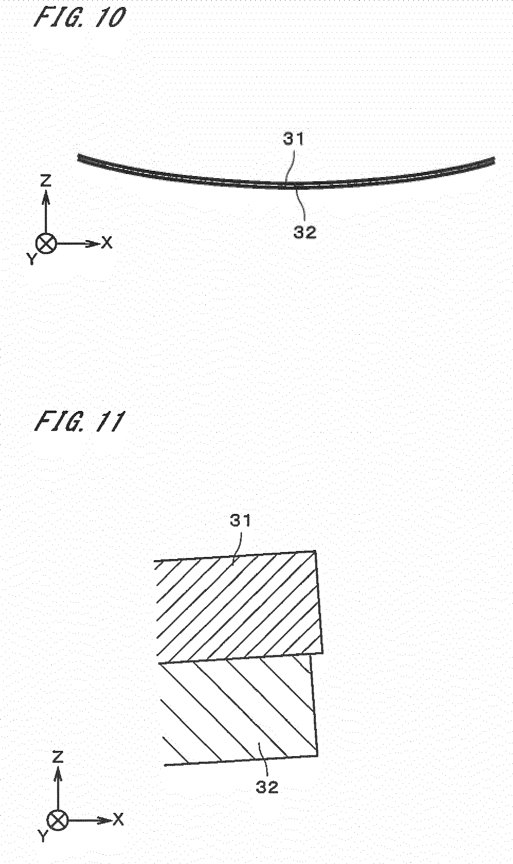

Fig. 10 illustrates the bent shapes of a reflecting plate 31 and a support plate 32 obtained through finite element analysis. Fig. 10 illustrates the result of the analysis conducted on the assumption that the mirror plate 36 and the auxiliary plate 37 of the reflecting plate 31 form a single plate-like member. For the convenience of illustration, the reflecting plate 31 and the support plate 32 are shown separately in Fig. 10.

Fig. 11 is an enlarged view of one ends in the width direction of the reflecting plate 31 and the support plate 32 in Fig. 10. As illustrated in Fig. 11, interlayer sliding occurs between the reflecting plate 31 and the support plate 32, which are fixed to each other with the double-faced adhesive tape 38 (see Fig. 3), and accordingly the end of the reflecting plate 31 protrudes outward in the width direction (i.e., on the +X side in Fig. 11) of the end of the support plate 32. The amount of sliding at each end in the width direction (i.e., the length of the protrusion in the width direction of the reflecting plate 31 from the support plate 32 due to bending) increases as the amount of bending of the reflector 3 increases. The amount of bending of the reflector 3 as used herein refers to a difference in distance between before and after the reflector 3 is bent, the distance being a distance in the thickness direction between each end in the width direction of the reflector 3 and the central portion thereof. In the example illustrated in Fig. 11, the amount of the above sliding is in the range of approximately 300 to 600 micrometers (*µ*m).

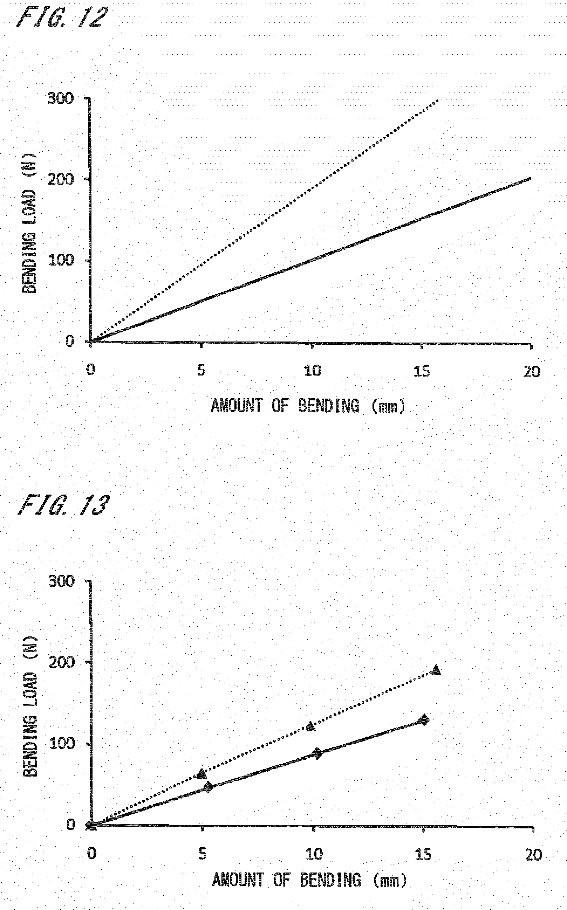

Figs. 12 and 13 illustrate relationships between the presence or absence of interlayer sliding between the reflecting plates 31 and the support plates 32, and a bending load that is a force required to bend the reflecting surface 30 of the reflector 3. In Figs. 12 and 13, the horizontal axis indicates the amount of bending, and the vertical axis indicates the bending load. Fig. 12 illustrates the relationship obtained through finite-element analysis. The solid line in Fig. 12 indicates the result of the analysis conducted on the assumption that interlayer sliding occurs between the reflecting plates 31 and the support plates 32. The broken line in Fig. 12 indicates the result of the analysis conducted on the assumption that the interlayer sliding does not occur. Fig. 13 shows experimental results. The solid line in Fig. 13 indicates the experimental result for a reflector 3 in which the reflecting plates 31 and the support plates 32 are fixed to each other with the double-faced adhesive tape 38 as described above. The broken line in Fig. 13 indicates the experimental result for a reflector 3 in which the reflecting plates 31 and the support plates 32 that are fixed to each other with the above double-faced adhesive tape 38 are further screwed to each other to prevent interlayer sliding.

The finite element analysis illustrated in Fig. 12 and the experimental results illustrated in Fig. 13 show that the occurrence of interlayer sliding between the reflecting plates 31 and the support plates 32 reduces the bending load required to bend the reflecting surface 30 by a predetermined amount of bending, as compared with the case where the interlayer sliding does not occur. The bending load required when the interlayer sliding occurs is, for example, approximately 50 to 70% of that required when the interlayer sliding does not occur.

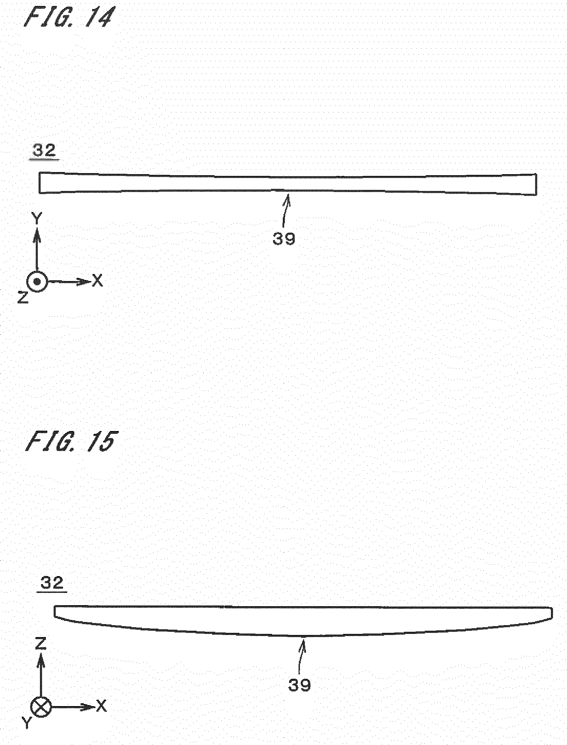

Fig. 14 is a plan view of a support plate 32. Fig. 15 is a side view of the support plate 32. For the convenience of illustration, the thickness direction in Fig. 15 is exaggerated for emphasis. As illustrated in Fig. 14, the width in the axial direction of the support plate 32 gradually decreases from each end in the width direction toward the central linear region 39. The thickness of the support plate 32 gradually increases from each end in the width direction toward the central linear region 39 as illustrated in Fig. 15. The support plate 32 of this shape allows a ratio between the distance in the width direction from each end in the width direction of the reflector 3 and the geometrical moment of inertia of the support plate 32 with respect to this distance (i.e., geometrical moment of inertia with respect to a neutral axis) to be approximately constant in a portion between each end and the central linear region 39.

The portion of the support plate 32 between each end and the central linear region 39 may be regarded as a cantilever that has the central linear region 39 as a fulcrum. Thus, when the aforementioned ratio is approximately constant, the curvature radius along the entire length of the support plate 32 becomes approximately constant and the reflecting surface 30 bends in a generally arc shape, irrespective of the magnitude of the bending load (or the amount of bending of the reflecting surface 30). As a result, not only sunlight emitted to the vicinity of the center in the width direction of the reflecting surface 30 but also sunlight emitted to the vicinity of the ends are efficiently guided to the heat recovery part 11. This further improves sunlight gathering performance.

In the reflector 3, a ratio between the distance in the width direction from each end in the width direction of the reflector 3 and flexural rigidity of the reflector 3 with respect to this distance may be approximately constant in the portion between each end and the central linear region 39. In this case, the curvature radius along the entire length of the support plate 32 also becomes approximately constant and the reflecting surface 30 bends in a generally arc shape, irrespective of the bending load. As a result, sunlight emitted to the reflecting surface 30 is efficiently guided to the heat recovery part 11. This further improves sunlight gathering performance.

In the reflector 3, the support plates 32 have portions having a thickness that gradually increases from each end in the width direction toward the central linear region 39, so that the ratio between the distance in the width direction from each end in the width direction of the reflector 3 and the flexural rigidity of the reflector 3 with respect to this distance becomes approximately constant in the portion between each end and the central linear region 39. In the presence of these portions of the support plates 32, the above ratio of the flexural rigidity of the reflector 3 will easily become approximately constant.

As described above, the reflecting plates 31 and the support plates 32 of the reflector 3 are fixed to each other with the double-faced adhesive tape 38 in which the adhesive layer 382 is disposed on each side of the base material 381, and accordingly interlayer sliding occurs between the reflecting plates 31 and the support plates 32 when the reflecting surface 30 is bent. As a result, the reflecting surface 30 will be bent with a small force into a desired shape. Additionally, a force applied in the shearing direction to the reflecting plate 31 decreases, which will suppress or prevent damage to the reflecting surface 30 when being deformed. Accordingly, the sunlight concentrating apparatus 1 and the solar heat recovery system 10 that are suitable for long-term use will be provided. For example, if the useful life of the sunlight concentrating apparatus 1 is assumed to be 20 years, the reflector 3 will repeatedly bend approximately 8000 times during this lifetime, but experiments using the above-described reflector 3 proves that even a repetition of 70,000 times of bending will cause no damage to the reflecting surface 30.

As described above, in the reflector 3, the mirror plates 36 and the auxiliary plates 37 of the reflecting plates 31 are fixed to each other with the double-faced adhesive tape 38 in which the adhesive layer 382 is disposed on each side of the base material 381. Thus, interlayer sliding also occurs between the mirror plates 36 and the auxiliary plates 37 when the reflecting surface 30 is bent. As a result, the reflecting surface 30 will be bent with a small force into a desired shape. Additionally, the force applied in the shearing direction to the mirror plates 36 further decreases, which will further suppress or prevent damage to the reflecting surface 30 when being deformed.

Since the auxiliary plates 37 are metal plates as described above, the weight of the reflecting plates 31 is reduced while improving the strength of the reflecting plates 31. Additionally, interlayer sliding easily occurs between the reflecting plates 31 and the auxiliary plates 37. In the above-described example, the auxiliary plates 37 are made of aluminum, and therefore the weight of the reflecting plates 31 is further reduced. The presence of the auxiliary plates 37 of the reflecting plates 31 will suppress scattering of fragments of the mirror plates 36 even if the mirror plates 36 are damaged.

The solar heat recovery system 10 described above may be modified in various ways.

In the reflector 3, it is not necessary to provide the double-faced adhesive tape 38 both between the mirror plates 36 and the auxiliary plates 37 and between the auxiliary plates 37 and the support plates 32. For example, the mirror plates 36 and the auxiliary plates 37 may be fixed to each other with the double-faced adhesive tape 38, and the auxiliary plates 37 and the support plates 32 may be fixed to each other with fixing means such as an adhesive that does not cause interlayer sliding. In this case, interlayer sliding occurs between the mirror plates 36 and the auxiliary plates 37 when the reflecting surface 30 is bent. As a result, it is possible to bend the reflecting surface 30 with a small force into a desired shape and to suppress or prevent damage to the reflecting surface 30 when being deformed.

Alternatively, the mirror plates 36 and the auxiliary plates 37 may be fixed to each other with fixing means such as an adhesive that does not cause interlayer sliding, and the auxiliary plates 37 and the support plates 32 may be fixed to each other with the double-faced adhesive tape 38. In this case, interlayer sliding occurs between the auxiliary plates 37 and the support plates 32 when the reflecting surface 30 is bent. As a result, it is possible to bend the reflecting surface 30 with a small force into a desired shape and to suppress or prevent damage to the reflecting surface 30 when being deformed.

In this way, at least two plate members selected from among the three plate members of the reflector 3, namely, the mirror plates 36, the auxiliary plates 37, and the support plates 32, may be fixed to each other with the double-faced adhesive tape 38. In this case, it is possible to bend the reflecting surface 30 with a small force into a desired shape and to suppress or prevent damage to the reflecting surface 30 when being deformed.

Each reflecting plate 31 does not necessarily have to include the mirror plate 36 and the auxiliary plate 37 and may be a single plate member having an upper surface that is part of the reflecting surface 30. Even in this case, if the reflecting plates 31 and the support plates 32 are fixed to each other with the double-faced adhesive tape 38, it is possible to bend the reflecting surface 30 with a small force into a desired shape and to suppress or prevent damage to the reflecting surface 30 when being deformed.

The reflector 3 does not necessary have to include a plurality of reflecting plates 31 and may include a single reflecting plate 31. In this case, the upper surface of the single reflecting plate 31 makes the entire reflecting surface 30. That is, the reflecting plate 31 (or the mirror plate 36 when the reflector 3 includes the mirror plate 36) has an upper surface that is at least part of the reflecting surface 30.

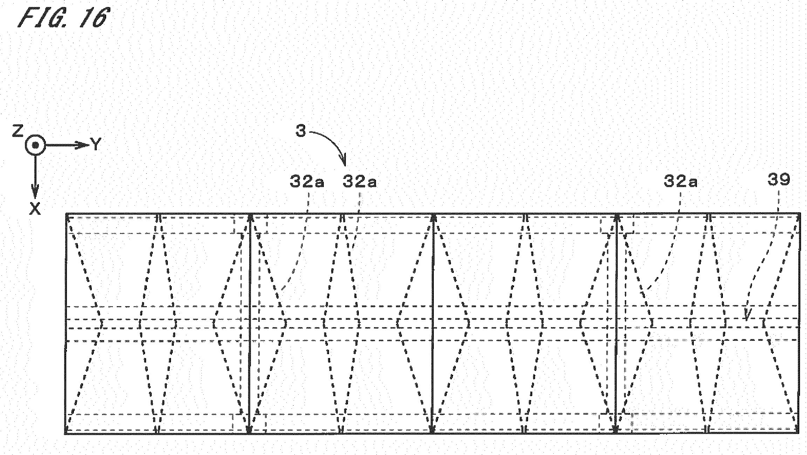

The shape of the support plates 32 is not limited to the example illustrated in Figs. 14 and 15 and may be modified in various ways. For example, a plurality of support plates 32a having a generally rhomboid shape in a plan view and having a fixed thickness may be arranged in the axial direction as illustrated in Fig. 16. Each support plate 32a may have a triangular portion between the central linear region 39 and each end in the width direction, such that the bottom side of the triangular portion is located in the central linear region 39 and the vertex thereof facing the bottom side is located in the vicinity of the above end. In this case, the ratio between the distance in the width direction from each end in the width direction of the reflector 3 and the geometrical moment of inertia of the support plate 32a with respect to that distance becomes approximately constant in the portion between the end and the central linear region 39. Alternatively, the ratio between the distance in the width direction from each end in the width direction of the reflector 3 and the flexural rigidity of the reflector 3 with respect to that distance may become approximately constant in the portion between the end and the central linear region 39. Even in this case, the reflecting surface 30 of the reflector 3 will bend in a generally arc shape, and accordingly, sunlight gathering performance will be further improved. Note that the ratio between the above distance and the above geometrical moment of inertia in the reflector 3 does not necessarily have to be constant, and the ratio between the above distance and the above flexural rigidity does not necessarily have to be constant.

The sunlight concentrating apparatus 1 may include a rotating mechanism 4 provided with a motor and rotate the main shaft part 2 via a speed-reduction mechanism. The sliding mechanism 72 may use machine elements (e.g., gears) other than cams to slide the sliding rods 71 in the axial direction in accordance with the rotation of the main shaft part 2. In the motion transmission mechanism 73, the sliding rods 71 and the ends of the reflector 3 may be mechanically coupled to each other by a link mechanism so that sliding of the sliding rods 71 causes the ends of the reflector 3 to move in the central normal direction.

Depending on the design of the sunlight concentrating apparatus 1, a bending mechanism that uses power independent of that of the rotating mechanism 4 may be employed. For example, a bending mechanism provided with a motor may be disposed below the end portions of the reflector 3, and the end portions of the reflector 3 may be moved in the central normal direction by the power of the motor. In this case, the drive of the bending mechanism may be controlled by the controller in accordance with the rotation of the main shaft part 2 caused by the rotating mechanism 4. The pair of bending mechanisms 7 described above does not necessarily have to move each end portion in the width direction of the reflector 3, as long as the end portions are moved in the central normal direction relative to the central linear region 39.

The heating medium in the heat recovery part 11 of the solar heat recovery system 10 may be used in applications other than electric power generation. The sunlight concentrating apparatus 1 having the reflecting surface 30, which is a variable bent surface, may be installed in facilities other than the solar heat recovery system 10.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Reference Signs List

- 1: Sunlight concentrating apparatus
- 2: Main shaft part
- 3: Reflector
- 4: Rotating mechanism
- 5: Main shaft supporter
- 7: Bending mechanism
- 11: Heat recovery part
- 30: Reflecting surface
- 31: Reflecting plate
- 32, 32a: Support plate
- 36: Mirror plate
- 37: Auxiliary plate
- 38: Double-faced adhesive tape
- 39: Central linear region
- 381: Base material
- 382: Adhesive layer
- J1: Central axis

## Claims

1. A sunlight concentrating apparatus for concentrating sunlight onto a heat recovery part, comprising:
a main shaft part that is long in a predetermined axial direction;
a plate-like reflector having an upper surface that is at least part of a reflecting surface that extends in said axial direction and a width direction perpendicular to said axial direction, and having a lower surface that is fixed to said main shaft part at a central linear region thereof that is located at approximately a center in said width direction and extends in said axial direction;
a main shaft supporter that supports said main shaft part rotatably about a central axis parallel to said axial direction;
a rotating mechanism for rotating said main shaft part to tilt said reflecting surface; and
a pair of bending mechanisms for bending said reflecting surface by equally moving opposite end portions in said width direction of said reflector in a central normal direction relative to said central linear region in accordance with rotation of said main shaft part, said central normal direction being a direction perpendicular to said axial direction and said width direction of said reflecting surface,
wherein said reflector includes:
a mirror plate having an upper surface that is at least part of said reflecting surface;
an auxiliary plate that overlaps with approximately an entire lower surface of said mirror plate; and
a support plate that overlaps with a lower surface of said auxiliary plate and is connected at opposite ends in said width direction thereof to said pair of bending mechanisms, and
at least two plate-like members, selected from among three plate-like members including said mirror plate, said auxiliary plate, and said support plate, are fixed to each other with a double-faced adhesive tape in which an adhesive layer is disposed on each side of a base material.

2. The sunlight concentrating apparatus according to claim 1, wherein
said three plate-like members are fixed to one another with said double-faced adhesive tape.

3. The sunlight concentrating apparatus according to claim 1 or 2, wherein
said auxiliary plate is a metal plate, and
said mirror plate and said auxiliary plate are fixed to each other with said double-faced adhesive tape.

4. A sunlight concentrating apparatus for concentrating sunlight onto a heat recovery part, comprising:
a main shaft part that is long in a predetermined axial direction;
a plate-like reflector having an upper surface that is at least part of a reflecting surface that extends in said axial direction and a width direction perpendicular to said axial direction, and having a lower surface that is fixed to said main shaft part at a central linear region thereof that is located at approximately a center in said width direction and extends in said axial direction;
a main shaft supporter that supports said main shaft part rotatably about a central axis parallel to said axial direction;
a rotating mechanism for rotating said main shaft part to tilt said reflecting surface; and
a pair of bending mechanisms for bending said reflecting surface by equally moving opposite end portions in said width direction of said reflector in a central normal direction relative to said central linear region in accordance with rotation of said main shaft part, said central normal direction being a direction perpendicular to said axial direction and said width direction of said reflecting surface,
wherein said reflector includes:
a reflecting plate having an upper surface that is at least part of said reflecting surface; and
a support plate that overlaps with a lower surface of said reflecting plate and is connected at opposite ends in said width direction thereof to said pair of bending mechanisms, and
said reflecting plate and said support plate are fixed to each other with a double-faced adhesive tape in which an adhesive layer is disposed on each side of a base material.

5. The sunlight concentrating apparatus according to any one of claims 1 to 4, wherein
a ratio between a distance in said width direction from each end in said width direction of said reflector and a geometrical moment of inertia of said support plate with respect to said distance is constant in a portion between said each end and said central linear region, or a ratio between said distance and flexural rigidity of said reflector with respect to said distance is constant in a portion between said each end and said central linear region.

6. The sunlight concentrating apparatus according to claim 5, wherein
said support plate includes a portion having a thickness that increases gradually from said each end to said central linear region, to make said ratio between said distance and said flexural rigidity of said reflector with respect to said distance constant in said portion between said each end and said central linear region.
